# EUROPÄISCHE PATENTSCHRIFT

(11) **EP 1 384 694 B1**
(45) Veröffentlichungstag und Bekanntmachung des Hinweises auf die Patenterteilung: **12.01.2005**
(21) Anmeldenummer: 03010775.9
(22) Anmeldetag: 14.05.2003
(51) Int. Cl.: B65G 53/52

(54) **Umlenktopf für den Einbau in pneumatische Förderanlagen**
Curved pipe for a pneumatic transport system
Tuyau coude pour un système de transport pneumatique

(30) Priorität: 24.07.2002 DE 10233470
(43) Veröffentlichungstag der Anmeldung: 28.01.2004
(73) Patentinhaber: INOTEC GmbH Transport- und Fördersysteme, 79761 Waldshut-Tiengen (DE)
(72) Erfinder: Schütz, Rolf, 78199 Bräunlingen (DE)
(74) Vertreter: Goy, Wolfgang, Dipl.-Phys.

(56) Entgegenhaltungen:
- DE-A- 3 814 034
- NL-C- 76 533

## Beschreibung

Die Erfindung betrifft einen Umlenktopf für den Einbau in pneumatische Förderanlagen nach dem Oberbegriff des Anspruchs 1.

Ein Anwendungsgebiet des erfindungsgemäßen Umlenktopfes ist der Einbau in pneumatische Förderanlagen von Baustoffsilos. Jedoch ist der erfindungsgemäße Umlenktopf nicht auf diese Anwendung beschränkt, sondern grundsätzlich für jede Art von pneumatischen Förderanlagen einsetzbar.

Zum Befüllen von Schüttgutsilos wird mittels pneumatischer Förderung das Material in die Silos eingeblasen. Die Siloleitungen werden dabei teilweise mehrmals um 90° umgelenkt. In den dabei eingesetzten Umlenktöpfen entsteht durch einseitige Beanspruchung und Verwirbelung ein erhöhter Verschleiß, der sich in den nachgeordneten Rohren fortsetzt. Dies ist insbesondere bei abrasiven Materialien wie beispielsweise Quarz oder Sand der Fall. Die Problemzone ist dabei der Auslauf des Umlenktopfes. Die Bohrung wird aufgeweitet, und das sich daran anschließende Auslaufrohr verschleißt mit. Die Probleme entstehen dann beim Auswechseln des Auslaufrohres. Die neuen Rohre haben einen exakt kreisrunden und maßgenauen Durchmesser. Wird nun dieses kreisrunde Rohr an die aufgeweitete ovale Auslassbohrung des Umlenktopfes angeflanscht, so entsteht eine Prallkante an dem neuen Auslaufrohr, an welcher das Material entlangläuft. Diese Prallkante und somit das Förderrohr sind dann sehr schnell verschlissen. Die Standzeit des Umlenktopfgrundkörpers ist an und für sich sehr hoch, jedoch muss bei ausgewaschener" Auslassbohrung der Bogen mit ausgetauscht werden. Zudem ist ein Zentrieren der Rohre beim Verschrauben mit dem Bogen aufgrund einer fehlenden Zentrierhilfe schwer möglich. Bei falscher Zentrierung entsteht aber zwangsläufig eine Prallkante mit erhöhtem Verschleiß.

Die DE 38 14 034 A1 zeigt ein gekrümmtes Gußrohr als Bestandteil eines Rohrstrangs für den Feststofftransport der eingangs angegebenen Art. Dieses Gußrohr kann mit einem Stahlrohr aus weicherem Material gekoppelt werden. Das Gußrohr ist endseitig mit eingesetzten, ringförmigen Verschleißeinsätzen aus einem gegenüber dem Material des Gußrohres verschleißfesteren Werkstoff versehen. Zum Verbinden des Gußrohres mit dem Stahlrohr dient eine Art Schelle mit zugeordneter ringförmiger Dichtung. - Ein Problem stellt die Erkennung des Verschleißzustandes des Verschleißringes dar. So kann man den Verschleißzustand des Verschleißringes nur durch eine optische Kontrolle erkennen, indem das Gußrohr abgeschraubt wird. Eine kontinuierliche Überwachung ist dadurch nicht möglich.

Die NL 76 533 C zeigt ein Rohr, welches an seinen beiden Enden mit einer korrespondierenden Zentriereinrichtung ausgestattet ist. Diese Zentriereinrichtung ist dadurch gebildet, daß die eine Stirnseite des Rohres einen ringförmigen Vorsprung aufweist und daß das andere Ende des Rohres eine korrespondierende Ringnut besitzt. Dadurch können zwei oder mehr Rohre aneinandergefügt werden.

Der Erfindung liegt die **Aufgabe** zugrunde, einen Umlenktopf der eingangs angegebenen Art zu schaffen, mit dem leichter erkannt werden kann, wann der Verschleißring ausgewechselt werden muß.

Die technische **Lösung** ist gekennzeichnet durch die Merkmale im Kennzeichen des Anspruchs 1.

Dadurch ist ein verschleißoptimierter Umlenktopf für den Einbau in pneumatische Förderanlagen beispielsweise von Baustoffsilos geschaffen. Die Grundidee des erfindungsgemäßen Umlenktopfes besteht darin, dort, wo im Topfauslauf ein erhöhter Verschleiß erfolgt, einen leicht austauschbaren Verschleißring vorzusehen. Dadurch ergibt sich eine wesentliche Standzeitverlängerung des Umlenktopfes sowie der nachfolgenden Rohre. Dabei können bereits existierende Umlenktöpfe in der erfindungsgemäßen Weise nachgerüstet werden, indem die Auslassbohrung des Umlenktopfes derart mechanisch bearbeitet wird, dass ein leicht zu wechselnder Verschleißring eingesetzt werden kann. Indem dem Verschleißring erfindungsgemäß eine Verschteißüberwachungseinrichtung zugeordnet ist, kann leicht erkannt werden, ob der Verschleißring verschlissen ist. Ist der Verschleißring oder das nachfolgende Rohr verschlissen, können diese einfach ausgetauscht werden, so dass man wieder einen nahezu neuwertigen Umlenktopf erhält.

Eine technische Realisierung der Verschleißüberwachungseinrichtung schlägt die Weiterbildung gemäß Anspruch 2 vor. Die Grundidee dieser Verschleißüberwacftung liegt in einer Drucküberwachung, welche mittels eines Leckage-Anzeigegerätes durchgeführt werden kann. Durch den Einsatz dieser Einrichtung kann der Verschleiß des Verschleißringes überwacht werden. In. dem Verschleißring wird dabei ein Hohlraum ausgebildet. Im eingebauten Zustand des Verschteißringes wird dieser Hohlraum durch eine Bohrung nach außen geführt. Hier kann ein entsprechendes Gerät angeschlossen werden. Der Hohlraum wird mit Überdruck (Stickstoff oder Druckluft) beaufschlagt. Ist der Verschleißrittg im Bereich des Hohlraumes verschlissen, fällt der darin befindliche Druck ab und gibt Alarm. Dies ist der Zeitpunkt dafür, den Verschleißring gegen einen neuen auszutauschen. Durch den Einsatz eines Verteilers kann ein Druckkontrollgerät für mehrere Umlenktöpfe eingesetzt werden. Der große Vorteil dieser Verschleißüberwachungseinrichtung mittels Überdruck besteht auch darin, dass im Staub-EX-Bereich gearbeitet werden kann und durch den Einsatz von Stickstoff bzw. Druckluft keinerlei Probleme auftreten. Eine kontinuierliche Überwachung des Verschleißzustandes des Verschteißringes ist somit gegeben. Zudem kann man mit der Ausbildung des Hohlraumes bestimmen, bei welcher Verschleißgrenze Alarm gegeben werden soll.

Gemäß der Weiterbildung in Anspruch 3 ist der Hohlraum vorzugsweise durch eine außenumfängliche Ringnut im Verschleißring gebildet.

Die Ausbildung des Verschleißringes als Hohlzylinder gemäß der Weiterbildung in Anspruch 4 stellt eine Möglichkeit einer einfachen Bereitstellung eines derartigen Verschleißringes dar, denn ein Hohlzylinder lässt sich technisch einfach herstellen und ist damit ein preiswertes Produkt.

Die Weiterbildung gemäß Anspruch 5 hat den Vorteil, dass sich eine derartige Ringausnehmung einfach herstellen lässt, insbesondere auch bei bestehenden Umlenktöpfen im Sinne einer Nachrüstung. Die Ringausnehmung reicht dabei bis zur Stirnfläche des Auslasses des Umlenktopfes. Dies bedeutet, dass der Verschleißring, insbesondere der Hohlzylinder, einfach von außen in die Ringausnehmung eingeschoben werden kann, wobei die Stirnseite des Verschleißringes bündig mit der Stirnfläche des Umlenktopfes abschließt.

Die Weiterbildung gemäß Anspruch 6 ist in dem Sinne zu verstehen, dass die Innenmantelfläche des Umlenktopfes stetig in die Innenmantelfläche des Verschleißringes übergeht und damit keine Stufe im Sinne einer Prallkante entsteht.

Aufgrund von Zentrierungsfehlem beim Anflanschen des Auslaufrohres am Auslass des Umlenktopfes kann eine Prallkante mit erhöhtem Verschleiß entstehen. Um eine genaue Zentrierung zu erreichen, schlägt die Weiterbildung gemäß Anspruch 7 eine Zentriereinrichtung vor.

Gemäß der Weiterbildung in Anspruch 8 kann es sich bei dieser Zentriereinrichtung um einen Zentrierring handeln. Die Verwendung eines Zentrierringes stellt eine technische einfache Möglichkeit zur Realisierung der Zentriereinrichtung dar.

Vorzugsweise ist dabei gemäß der Weiterbildung in Anspruch 9 der Zentrierring in Ringnuten angeordnet. Eine derartige Ringnut kann auf einfache Weise in die Stirnfläche des Auslaufs eingefräst werden. Da das Auslaufrohr ebenfalls eine derartige Ringnut aufweist, wird durch den Einsatz des Zentrierringes in die beiden Ringnuten eine genaue Zentrierung erreicht. Eine Prallkante aufgrund von Zentrierungsfehlern wird dadurch auf technisch einfache Weise vermieden.

Ein Ausführungsbeispiel eines erfindungsgemäßen Umlenktopfes für den Einbau in eine pneumatische Förderanlage beispielsweise von Baustoffsilos wird nachfolgend anhand der Zeichnungen beschrieben. In diesen zeigt:
- Fig. 1: einen Längsschnitt durch den Umlenktopf im Ursprungszustand gemäß Stand der Technik;
- Fig. 2a: einen Längsschnitt durch den Umlenktopf der Fig. 1 mit angeflanschtem Auslaufrohr im Zustand des Verschleißes;
- Fig. 2b: die Anordnung in Fig. 2a nach dem Ersetzen des verschlissenen Auslaufrohres durch ein neues Auslaufrohr;
- Fig. 3: einen Längsschnitt durch einen weiterentwickelten Umlenktopf ebenfalls gemäß Stand der Technik;
- Fig.4a: den erfindungsgemäßen Umlenktopf mit zusätzlicher Verschleißüberwachung;
- Fig. 4b: einen Querschnitt durch den Umlenktopf im Bereich der Verschleißüberwachung in Fig. 4a.

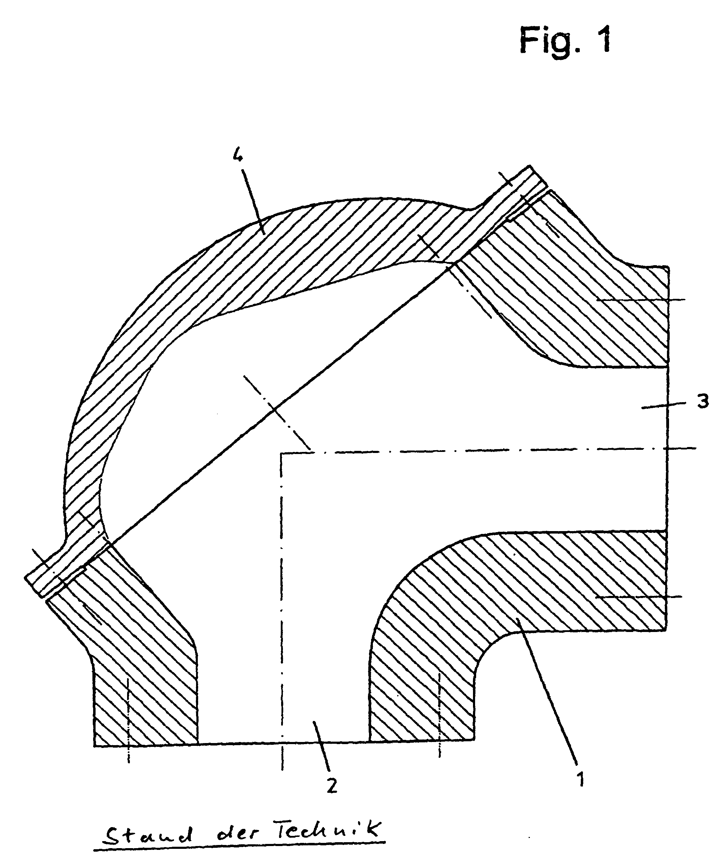

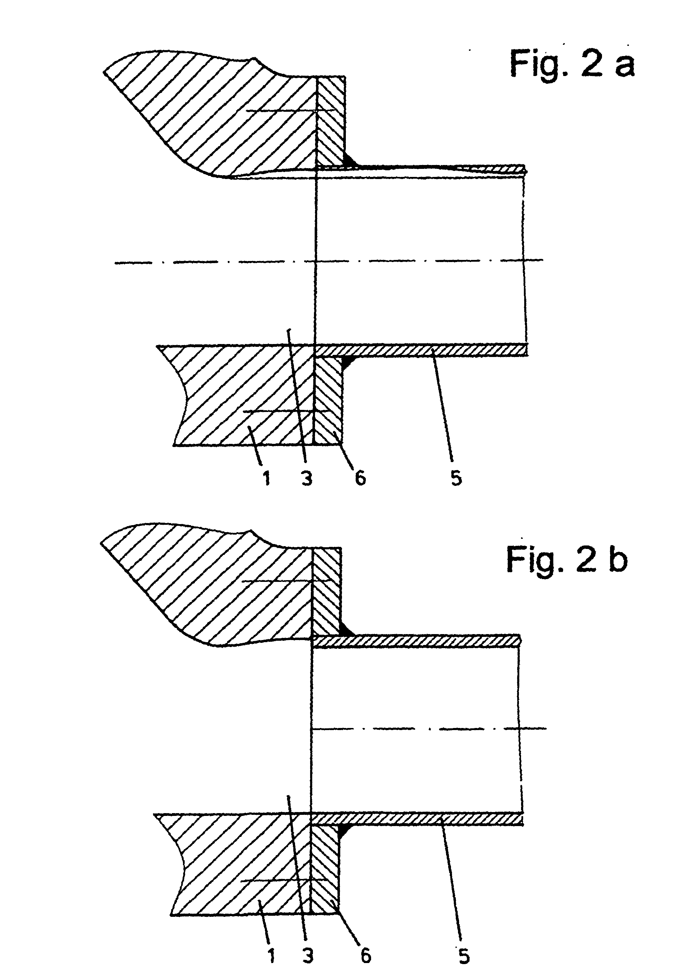

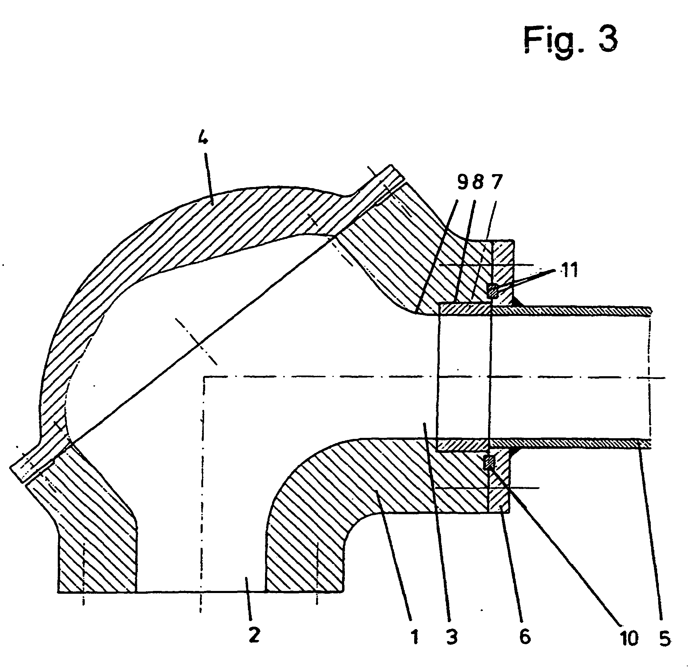

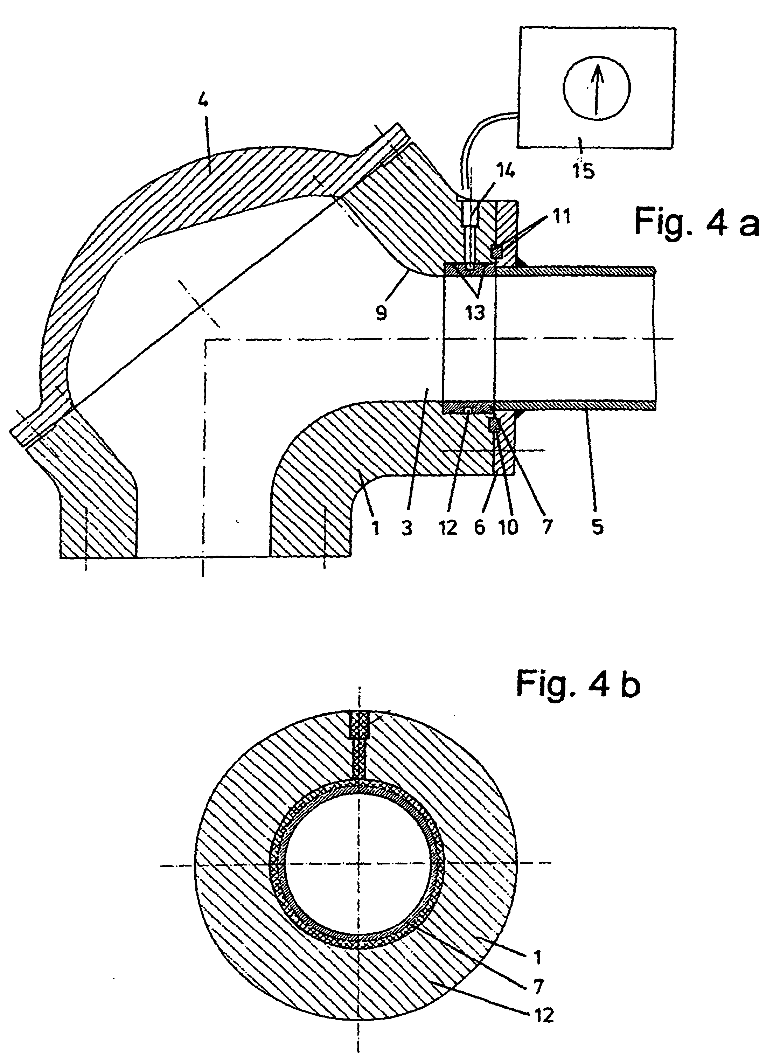

Fig. 1 sowie die Fig. 2a und 2b sowie schließlich Fig. 3 zeigen einen Umlenktopf nach dem Stand der Technik (zur Verdeutlichung der Problemstellung). Fig. 4a und 4b zeigen dann eine Ausführungsform des erfindungsgemäßen Umlenktopfes.

Der in Fig. 1 dargestellte Umlenktopf 1 in Form eines Umlenkbogens weist einen Einlass 2 sowie einen Auslass 3 auf. Im Außenbogenbereich ist ein Deckel 4 vorgesehen.

Fig. 2a zeigt den Umlenktopf 1 mit angeflanschtem Auslaufrohr 5. Hierzu ist ein ringförmiger Flansch 6 vorgesehen. Während der ursprüngliche Innendurchmesser des Auslaufrohres 5 gestrichelt dargestellt ist, ist mit durchgezogener Linie der Zustand des Umlenktopfes 1 sowie des Auslaufrohres 5 nach erfolgtem Verschleiß gezeigt. Irgendwann ist der Zustand erreicht, bei dem das Auslaufrohr 5 durchbricht.

Fig. 2b zeigt den Zustand nach dem Ersetzen des Auslaufrohres 5 durch ein neues Auslaufrohr 5 an den verschlissenen Auslass 3 des Umlenktopfes 5. Dabei ist erkennbar, dass aufgrund des gleichermaßen erfolgten Verschleißes im Umlenktopf 1 eine Prallkante entsteht. Diese bildet einen erhöhten Verschleißangriffspunkt.

Der Umtenktopf 1, wie er in Fig. 3 dargestellt ist, weist im Bereich des Auslasses 3 des Umlenktopfes 1 einen hohlzylinderförmigen Verschleißring 7 auf. Dieser ist in eine entsprechende Ringausnehmung 8 im Auslass 3 des Umlenktopfes 1 eingesetzt. Die Innenwandung 9 des Umlenktopfes 1 geht dabei stetig in die Innenwandung des Verschleißringes 7 über. Dies gilt auch für den Übergang zum Auslaufrohr 5.

Zur Zentrierung des Auslaufrohres 5 am Umlenktopf 1 ist ein Zentrierring 10 vorgesehen. Zu diesem Zweck ist in der Stirnwand des Umlenktopfes 1 sowie in der Stirnwand des Flansches 6 jeweils eine Ringnut 11 ausgebildet.

Die Funktionsweise ist wie folgt:

Sobald der Verschleißring 7 oder das Auslaufrohr 5 verschlissen ist, wird - nach Abflanschen des Auslaufrohres 5 - der Verschleißring 7 ersetzt und/oder ein neues Auslaufrohr 5 angeflanscht.

Der erfindungsgemäße Umlenktopf 1 der Fig. 4a und 4b geht von dem gleichen Grundprinzip aus. Die erfindungsgemäße Erweiterung besteht in einer Verschleißüberwachung.

Zu diesem Zweck ist der Verschleißring 7 mit einem Hohlraum 12 in Form einer außenumfänglichen Ringnut versehen. Beidseits des Hohlraumes 12 ist zwischen dem Verschleißring 7 und dem Umlenktopf 1 eine Dichtung 13 vorgesehen, so dass der Hohlraum 12 druckdicht abgeschlossen ist. In den Hohlraum 12 mündet ein Anschluß 14, an welchen eine Drucküberwachungseinrichtung 15 angeschlossen ist.

Die Funktionsweise ist wie folgt:

Mittels der Drucküberwachungseinrichtung 15 wird in dem Hohlraum 12 ein Überdruck mittels Stickstoff oder Druckluft erzeugt. Der Druck wird gemessen und überwacht. Sobald der Verschleiß in dem Verschleißring 7 derart groß geworden ist, dass der Hohlraum 12 leck wird, entweicht das Überdrucksgas. Es ist ein Druckabfall festzustellen, welcher detektiert und angezeigt wird. Nachfolgend kann dann der Verschleißring 7 sowie das Auslaufrohr 5 aufgrund Erreichens der Verschleißgrenze ersetzt werden.

### Bezugszeichenliste

- 1: Umlenktopf
- 2: Einlass
- 3: Auslass
- 4: Deckel
- 5: Auslaufrohr
- 6: Flansch
- 7: Verschleißring
- 8: Ringausnehmung
- 9: Innenwandung
- 10: Zentrierung
- 11: Ringnut
- 12: Hohlraum
- 13: Dichtung
- 14: Anschluß
- 15: Drucküberwachungseinrichtung

## Patentansprüche

1. Umlenktopf (1) für den Einbau in pneumatische Förderanlagen,
mit einem Einlass (2) zum Anschließen eines Zulaufrohres,
mit einem Auslass (3) zum Anschließen eines Auslaufrohres (5) mittels eines Flansches (6) sowie
mit einem auswechselbaren Verschleißring (7) in der Innenwandung (9) des Auslasses (3) des Umlenktopfes (1)
**dadurch gekennzeichnet,**
**dass** dem Verschleißring (7) eine Verschleißüberwachungseinrichtung zugeordnet ist.

2. Umlenktopf nach dem vorhergehenden Anspruch,
**dadurch gekennzeichnet,**
**dass** im Verschleißring (7) ein gegenüber der Umgebung abgedichteter Hohlraum (12) ausgebildet ist,
**dass** im Vergleich zum Umgebungsdruck der Hohlraum (12) mit Überdruck oder Unterdruck beaufschlagbar ist und
**dass** bei Erreichen der Verschleißgrenze der Hohlraum {12) in Verbindung mit dem Umgebungsdruck gelangt und die damit verbundene Druckänderung detektierbar ist.

3. Umlenktopf nach Anspruch 2,
**dadurch gekennzeichnet,**
**dass** der Hohlraum (12) durch eine außenumfängliche Ringnut im Verschleißring (7) gebildet ist.

4. Umlenktopf nach einem der vorhergehenden Ansprüche,
**dadurch gekennzeichnet,**
**dass** der Verschleißring (7) ein Hohlzylinder ist.

5. Umlenktopf nach einem der vorhergehenden Ansprüche,
**dadurch gekennzeichnet,**
**dass** der Verschleißring (7) in einer im Auslass (3) ausgebildeten, korrespondierenden Ringausnehmung (8) angeordnet ist.

6. Umtenktopf nach einem der vorhergehenden Ansprüche,
**dadurch gekennzeichnet,**
**dass** der Verschleißring (7) bündig in der Innenmantelfläche des Umlenktopfes (1) liegt.

7. Umlenktopf nach einem der vorhergehenden Ansprüche,
**dadurch gekennzeichnet,**
**dass** in der Kontaktftäche zwischen der Stirnseite des Umlenktopfes (1) einerseits und der Stirnseite des Flansches (6) des Auslaufrohres (5) andererseits eine Zentriereinrichtung vorgesehen ist.

8. Umlenktopf nach Anspruch 7,
**dadurch gekennzeichnet,**
**dass** die Zentriereinrichtung einen Zentrierring (10) aufweist.

9. Umlenktopf nach Anspruch 8,
**dadurch gekennzeichnet,**
**dass** der Zentrierring (10) in Ringnuten (11) in den beiden Stirnseiten angeordnet ist.

## Claims

1. Deflecting pot (1) for use in pneumatic transport systems, with an inlet (2) for connection of a supply pipe, with an outlet (3) for connection of an outlet pipe (5) by means of a flange (6), and with an exchangeable wear ring (7) in the inner wall (9) of the outlet (3) of the deflecting pot (1), **characterised in that** allocated to the wear ring (7) is a wear monitoring device.

2. Deflecting pot according to the previous claim, **characterised in that** the wear ring (7) is formed as a cavity (12) sealed against the environment, and that the cavity (12) can be set to a higher or lower pressure in relation to the ambient pressure, and that on reaching the wear limit the cavity (12) makes connection with the ambient pressure and the associated pressure change can be detected.

3. Deflecting pot according to claim 2, **characterised in that** the cavity (12) is formed by a ring groove on the outer periphery of the wear ring (7).

4. Deflecting pot according to any of the previous claims, **characterised in that** the wear ring (7) is a hollow cylinder.

5. Deflecting pot according to any of the previous claims, **characterised in that** the wear ring (7) is arranged in a corresponding ring recess (8) formed in the outlet (3).

6. Deflecting pot according to any of the previous claims, **characterised in that** the wear ring (7) lies flush in the inner casing surface of the deflecting pot (1).

7. Deflecting pot according to any of the previous claims, **characterised in that** a centring device is provided in the contact surface between the face of the deflecting pot (1) on the one side and the face of the flange (6) of the outlet pipe (5) on the other.

8. Deflecting pot according to claim 7, **characterised in that** the centring device has a centring ring (10).

9. Deflecting pot according to claim 8, **characterised in that** the centring ring (10) is arranged in ring grooves (11) in the two faces.

## Revendications

1. Pipe de déviation ou coude (1) destiné(e) à l'intégration dans des installations de convoyage pneumatique, comprenant
une admission (2) conçue pour le raccordement d'une tubulure d'arrivée,
une sortie (3) conçue pour le raccordement d'une tubulure d'évacuation (5), au moyen d'une bride (6),
ainsi qu'une bague d'usure (7) interchangeable, dans la paroi intérieure (9) de la sortie (3) de la pipe de déviation ou coude (1),
**caractérisé(e)** par le fait
qu'un dispositif de surveillance d'usure est affecté à la bague d'usure (7).

2. Pipe de déviation selon la revendication précédente,
**caractérisée par le fait**
**qu'**une dépouille (12), rendue étanche vis-à-vis de l'espace environnant, est ménagée dans la bague d'usure (7),
**que** ladite dépouille (12) peut être sollicitée par une surpression ou une dépression, comparativement à la pression environnante, et
**que**, lorsque la limite d'usure est atteinte, ladite dépouille (12) entre en communication avec la pression environnante et la variation de pression corrélative peut être détectée.

3. Pipe de déviation selon la revendication 2,
**caractérisée par le fait**
**que** la dépouille (12) est matérialisée par une saignée annulaire pratiquée dans le pourtour extérieur de la bague d'usure (7).

4. Pipe de déviation selon l'une des revendications précédentes,
**caractérisée par le fait**
**que** la bague d'usure (7) est un cylindre creux.

5. Pipe de déviation selon l'une des revendications précédentes,
**caractérisée par le fait**
**que** la bague d'usure (7) est logée dans un évidement annulaire (8) de forme complémentaire, façonné dans la sortie (3).

6. Pipe de déviation selon l'une des revendications précédentes,
**caractérisée par le fait**
**que** la bague d'usure (7) vient à fleur de la surface de l'enveloppe intérieure de ladite pipe de déviation (1).

7. Pipe de déviation selon l'une des revendications précédentes,
**caractérisée par le fait**
**qu'**un dispositif de centrage est prévu dans la surface de contact entre, d'une part, la face extrême de ladite pipe de déviation (1) et, d'autre part, la face extrême de la bride (6) de la tubulure d'évacuation (5).

8. Pipe de déviation selon la revendication 7,
**caractérisée par le fait**
**que** le dispositif de centrage présente une bague de centrage (10).

9. Pipe de déviation selon la revendication 8,
**caractérisée par le fait**
**que** la bague de centrage (10) est logée dans des saignées annulaires (11) pratiquées dans les deux faces extrêmes.
